# EUROPEAN PATENT APPLICATION

(11) **EP 1 985 405 A1**
(43) Date of publication of application: **29.10.2008**
(21) Application number: 08155233.3
(22) Date of filing: 25.04.2008
(51) Int. Cl.: B23K 37/053

(54) **Device and method for internal pipe alignment and welding**

(30) Priority: 27.04.2007 US 796746
(71) Applicant: VERMAAT TECHNICS B.V., 3235 XK Rockanje (NL)
(72) Inventor: Vermaat, Huibrecht Pieter, 3235 XK, Rockanje (NL)
(74) Representative: De Hoop, Eric

(57) **Abstract**

A device (200) for clamping a plurality of pipes to each other, said device comprising:
a rigid frame (201),
first (202) and second (203) clamping means supported on the frame for tightly engaging inner sides of respective first and second pipes having respective ends in line with and at a welding distance from each other,
means for operating the first clamping means,
means for operating the second clamping means,

means for determining an abutment position of the first clamping means,
means for storing data concerning the abutment position of the first clamping means in a memory,
control means for controlling movement of the second clamping means to a position based upon the stored data concerning the abutment position of the first clamping means.

Furthermore a method for applying such a device is revealed.

## Description

### BACKGROUND OF THE INVENTION

The invention relates to a device and a method for welding pipes or tubes to each other for forming pipe lines for for instance oil or gas, in which two pipe ends to be welded to each other are aligned with respect to each other and then a connecting weld is made. The invention particularly relates to lining up stationary, lying pipes and welding these to each other.

It is known to use a so-called line-up clamp to that end, which clamp is moved within the pipes until on either side of the weld to be formed, and which, at that location, is brought into clamping engagement with the inner surfaces of the ends of the pipes to be welded together. The frame on which the clamping means for both pipes have been arranged provides a rigid orienting means, as a result of which the pipes will be exactly aligned before welding. Such an arrangement is for instance shown in Dutch patent application 90.02396. Here, after orienting the pipes an annular supporting frame for the welding equipment is placed at the outside of the pipes, using a mounting belt arranged earlier on one of the pipes. For said technique, International patent application WO 95/21721 could also be referred to, in which document a line-up clamp which is mobile within the pipes is described.

When welding two pipes together, the quality of the weld depends on the quality of the alignment; if the ends of two pipes which are to be welded together differ in shape too much it becomes impossible to make a high quality weld.

It is an object of the invention to improve on this.

### SUMMARY OF THE INVENTION

To this end one aspect the present invention provides an internal line-up clamp for clamping a plurality of pipes to each other, said clamping device comprising: a rigid frame, first and second clamping means supported on the frame for tightly engaging inner sides of respective first and second pipes having respective ends in line with and at a welding distance from each other, means for operating the first clamping means, means for operating the second clamping means, said device further comprising means for determining an abutment position of the first clamping means, means for storing data concerning the abutment position of the first clamping means in a memory and control means for controlling movement of the second clamping means to a position based upon the stored data concerning the abutment position of the first clamping means.

Advantageously, deforming towards a determined shape of at least one end of a pipe allows for welding the pipes in a state in which the pipe ends are substantially of the same shape, thus improving the quality of the weld. Furthermore, using this device, there is no need to put more stress on the deformed material than necessary to adapt to the determined shape, which is especially useful when both pipes have similar yet not equal shapes. This in turn reduces the stress on the finished weld.

Preferably the clamping means comprise a circumferential series of clamping plates which can be radially retracted and extended, for direct engagement of the surfaces of the pipes. The division in clamping plates renders a better controllable clamping and aligning possible.

An embodiment of the device comprises welding means, said welding means being supported on the frame. The welding means are preferably provided between the first and second clamping means. Such welding means could include, for example, a welding robot guidance, and possibly means for supplying welding gas and/or welding wire. The service lines towards the device can be kept short and simple as a result. This may result in a largely independent combined aligning and welding device.

In a further embodiment of the device, the control means are furthermore arranged for controlling the movement of the welding means to a position based upon the stored data concerning the abutment position of the first clamping means. It is thus possible to position the welding means at an optimal distance from the edges of the pipes.

An embodiment of the device comprises third clamping means for clamping the pipes, said third clamping means being supported on the frame such that said first clamping means is positioned between second and third clamping means. These third clamping means are of use in positioning the clamping apparatus correctly with respect to the first pipe.

An embodiment of the device comprises backing means, said backing means being provided between the first and second clamping means and being supported on the frame. The backing means preferably comprise a circumferential series of backing shoes that are radially retractable and extendible. The backing means can be used in combination with welding from the outside, for example using a welding robot as disclosed in EP 1 674 196 by applicant, to form a smooth weld.

In a further embodiment of the device, the control means are furthermore arranged for controlling the movement of the backing means to a position based upon the stored data concerning the abutment position of the first clamping means, enabling a more accurate positioning of the backing means.

An embodiment of the device comprises movement means, for moving the device inside the pipes. Preferably the movement means comprise means for guiding engagement of the inside of the pipes, which are preferably formed by rollers on or at the frame, for rolling support of the frame in the pipes. The aligning and guidance is promoted when several sets of rollers are present which are spaced apart in circumferential direction. The mobility of the device can be further improved by adding driving means on the frame for driving the device through the pipes.

Preferably the first and the second clamping means are arranged on different frame parts, that are connected to each other by means of connection means that can be adjusted in axial direction, preferably hydraulic cylinders, in order to be able to adjust the position of the end edges to the desired position and/or distance with respect to each other for the weld.

An embodiment of the device comprises spacing means, said spacing means are provided between the first and second clamping means and being supported on the frame. Said spacing means preferably comprise a circumferential series of spacers that are radially retractable and extendible.
When welding from the outside of the pipes each of these spacers can be retracted individually whenever the welding means reach the position of such a spacer.

In a further embodiment of the device, the control means are furthermore arranged for controlling the movement of the spacing means to a position based upon the stored data concerning the abutment position of the first clamping means, enabling a more accurate positioning of the spacing means.

An embodiment of the device comprises a transceiver for remote control of said device. Thus long operating lines are no longer necessary for a remote-controlled line-up clamp which moves within the pipes.

According to another aspect, the present invention provides a method for welding a plurality of pipes, comprising a first pipe and a second pipe, to each other, the method comprising the steps of:
- providing a device as described above;
- determining a shape of the first pipe with help of the first clamping means and storing data concerning said shape in a memory as shape data, and bringing the second clamping means into engagement with the second pipe and urging the second clamping means into a position on the second pipe based on the shape data;
- tightly engaging a side of the first pipe with use of the first clamping means and a side of the second pipe with use of the second clamping means while keeping the first and second clamping means in line with respective ends of the first and second clamping means close to or against each other; and
   - connecting the first and second pipes using welding means.

It is preferable here that after storing the shape data of the first pipe, the first clamping means are further operated until in a position in which the first pipe is clamped. Because the shape of the first end of the first pipe is known it is possible to clamp the first end of said pipe without placing undue stress on the material of the pipe.

In a further development of the method, the diameter and deviations in diameter of the pipe, in particular of an end of the first pipe adjacent to the second pipe, are determined. If the deviations from a cross-section op the pipe are too large, depending on the specifications of the pipe, then the cross-section can be adjusted by deforming the end of the first pipe using the first clamping means. The position of the first clamping means is then stored in a memory as shape data.

Once the shape of the first pipe has been determined with the help of the first clamping means, said shape is stored in a memory as shape data and the second clamping means are brought into engagement with the second pipe and, based on the shape data stored in the memory, are urged into a position corresponding to the shape stored.

In a further development of the method, during movement of the second clamping means into the position on the second pipe based on the shape data, the second pipe is deformed to a shape that corresponds substantially to the shape of the first pipe.

Preferably, after the second clamping means engages with the second pipe at a position determined by the stored shape data, the second clamping means is moved to a position at which it clamps the second pipe.

Thus it can be achieved that the shapes of the end edges of both pipes have substantially the same contour, so that the weld can be properly arranged and a reliable connection can be laid over the entire circumference. Pipes are usually a little deformed and different from each other, which by using the method according to the invention need not have detrimental effects any more, as the shape is now at least partly adjusted. The method according to the invention is especially suitable for welding together two pipe ends which are both somewhat deformed. Because deformation of the pipe end or pipe ends is based on the shape of the pipe end(s), the deformation of the pipes can be applied in such a manner that the stress on the deformed material is minimal while ensuring an optimal fit. This in turn leads to less stress on the weld once the clamping device disengages the pipes.

Preferably the frame is moved along the pipes by means of driving means provided on the frame, such as a driven roller for instance. External provisions can be kept limited as a result.

Alternatively it is possible to pull the frame with a cable, in which case the frame can remain lightweight and the movement can take place more quickly.

In a further development of the method according to the invention, the welding activities are split up, to which end after making the first connecting weld the frame is moved to a next pipe transition, and the weld is finished with the help of external welding means, preferably simultaneously to the movement or the making of the next first connecting weld. The -relatively expensive- line-up part here is used no longer than strictly necessary and it can be used again quickly for a next welding process. The weld connection is sufficiently strong here for holding both pipes together. The weld can be finished with simpler welding means.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 shows a view in perspective of an exemplary embodiment of a device according to the invention;
Figure 2 shows a front-view of the device of figure 1;
Figure 3 shows a view in perspective of a second exemplary embodiment of a device according to the invention, where the cylinders are in a retracted position;
Figure 4 shows the device of figure 3, where the cylinders are in an extended position;
Figure 5 shows an internal welding unit takes the place of the spacing unit of figures 3 and 4.
Figure 6 shows a view in perspective of a third exemplary embodiment of a device according to the invention, where the cylinders are in a retracted position;
Figure 7 shows the device of figure 6, where the cylinders are in an extended position; and
Figure 8 shows the backing means of the device of figure 6 in detail.

### DETAILED DESCRIPTION OF THE DRAWINGS

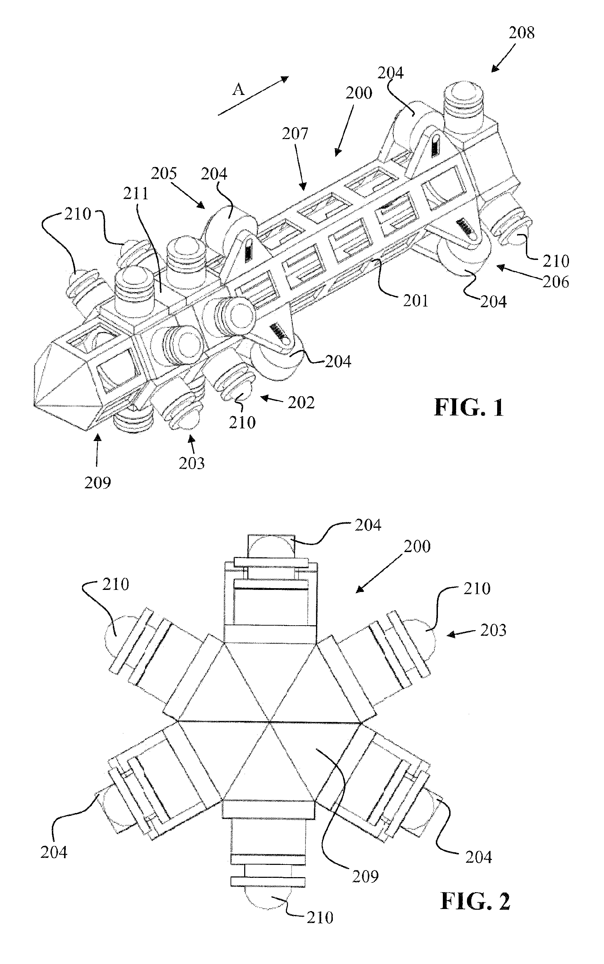

In figure 1 an exemplary embodiment of the aligning device 200 shows an internal alignment clamp for aligning pipes which are situated with their end edges near to each other.
In particular the device is suitable for aligning a first pipe (not shown), which may be connected to a finished part of a pipeline extending in a direction "A", with a second pipe (not shown). The first end of the first pipe is still open. Situated near the first end of the first pipe is a first end of the second pipe, which is also still open. Opposite the first end of second pipe is the second end of second pipe. Both pipes are supported by means that are not further shown, the first pipe for instance on blocks or a mound of soil, and the second pipe hanging from a crane or also on a mound of soil.

The device 200 comprises a tubular frame 201. In this embodiment the frame is substantially hexagonal in cross-section, and is provided with a first cylinder set 202 comprising six cylinders for clamping the first pipe and measure or correct deformation of said first pipe. The frame 201 further comprises a second cylinder set 203 comprising six cylinders for clamping the second pipe and making it match the shape of the first pipe as determined by the first cylinder set 202. A front view of this embodiment of the aligning device 200 is shown in figure 2.

The frame 201 is provided with spring loaded wheels 204 for transport of the line-up clamp through the pipes. One or more wheels 204 are motor driven. The spring-loaded wheels comprise a first series of wheels 205 which are positioned next to the first cylinder set 202, further referred to as 'front wheels'. The spring-loaded wheels further comprise a second set of wheels 206 placed at a distance from the first set of wheels, further denoted as 'rear wheels'.

Between the front wheels 205 and the rear wheels 206, a mounting space 207 is provided for mounting devices such as hydraulic pumps, hydraulic valves and/or a control computer for controlling the aligning device 200, and in particular for controlling the first cylinder set 202, the second cylinder set 203, the driven wheel(s) 204, and a third cylinder set 208 which is provided at the rear side of the aligning device 200.

In front of the second cylinder set 203 a mounting space 209 is provided for mounting a transceiver for remote control of the aligning device 200 and/or a battery pack for powering said transceiver and/or the control computer in the mounting space 207. Preferably all cylinders of the first, second and third cylinder set are individually controlled by the control computer.

In this embodiment each of the cylinder sets comprises at least three cylinders which can radially extend or retract clamping shoes 210. The cylinders are operable as movable jacks comprising hydraulic cylinder assemblies with clamping shoes 210. As can be seen in figure 1 the clamping shoes 210 form series running in circumferential direction of the aligning device 200.

The aligning device 200 as shown in figure 1 consists of a tubular main body 201 having spring-loaded front and rear wheels 205, 204 positioned at respectively the front end and rear end of the frame 201. At the front end of the frame 201, next to the spring-loaded front wheels 205, the first cylinder set is attached to the frame 201. Subsequently, a spacing unit 211 is attached to the first cylinder set 202, and the second cylinder set 203 is attached to the spacing member 211. Subsequently the front mounting space 209 for the transceiver is attached to the second cylinder set. At the end portion of the frame 201., next to the rear spring-loaded wheels 206, a third cylinder set 208 is provided, which can be used to keep the line-up clamp 200 straight inside the pipes. Inside the tubular frame 201 and/or the front frame 209, control and regulation means (not shown) have been arranged, with which the various parts of the device 200 can be operated and controlled.

Said unit particularly comprises a measuring device for determining the position of the clamping shoes 210, in particular at abutment against the wall of the pipe concerned, and storing said position in the memory. The alignment device 200, according to this embodiment, can be wireless controlled, for instance by remote control from the outside of the pipe. Special provisions, such as long operating lines, are not necessary for this embodiment.

When pipes have to be welded to each other with their ends, the device 200 is provided on the inside of the first pipe, and is moved to the open first end of the first pipe. When the spacing member is placed at the first end of the pipe, the device 200 is stopped. The first cylinder set 202 is activated and the clamping shoes 210 are moved radially towards the sides of the first pipe. Also the third cylinder set 208 is activated and the clamping shoes 210 are moved against the inner side of the pipe. By controlling the first and third cylinder set, the frame 210 is placed in the centre of the pipe. The third cylinder set 208 is further controlled, such that the clamping shoes exert a clamping force on the pipe for fixing the longitudinal position of the device 200 in the first pipe.

From the position of the cylinders of the first cylinder set 202, the diameter and deviations in diameter of the pipe, in particular of the first end of the pipe, is determined. If at the first end of the first pipe the deviations from a circular cross-section of the pipe are too large, depending on the specifications of the pipe, then the cross-section can be adjusted by deforming the first end of the first pipe using the first cylinder set 202. The position of the cylinders of the first cylinder set 202 is stored in a memory of the computer as shape data.

Subsequently the second pipe is placed with a first end of the second pipe at the welding distance from and in line with the first end of the second pipe. Subsequently, the second set of cylinders 203 is activated and the clamping shoes 210 of the second set 203 are placed against the inner side of the second pipe. Subsequently the cylinders of the second cylinder set 203 are controlled based on the shape data, to match the shape of the first end of the first pipe.

Subsequently, welding means, which may be attached to the frame of device 200 and/or on the outside of the first or second pipe, may be activated to make a welding seam to connect the respective ends of the first and second pipe. When the first and second pipe are welded to each other, the first, second and third cylinder sets are radially retracted, and the aligning device 200 can move along the inner sides of the first and second pipe towards the second end of the second pipe where the procedure can be repeated.

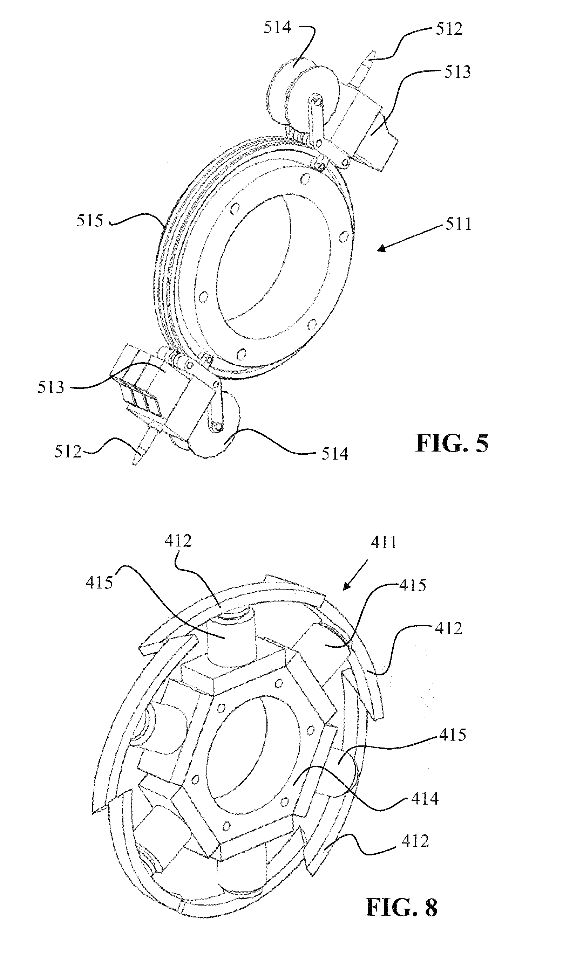

It is advantageous to weld the first and second pipes to each other using the internal welding unit of figure 5 such that they are connected to each other in a movement fixed manner, subsequently moving the clamping device to a next welded joint to be made and finishing the weld between the first and second pipes with other welding means. These other welding means preferably comprise an outside welding robot.

Alternatively, when using more than one external welding robot, it is possible to first make a connecting weld with a first robot, then move the clamping device to a next welded joint to be made and simultaneously complete the weld between the first and second pipes using the first welding robot. A second robot can then be used to make a connecting weld between the second pipe and a further pipe using the clamping device. Thus the clamping device can be used on other welding sites without having to wait for the welds to be fully completed.

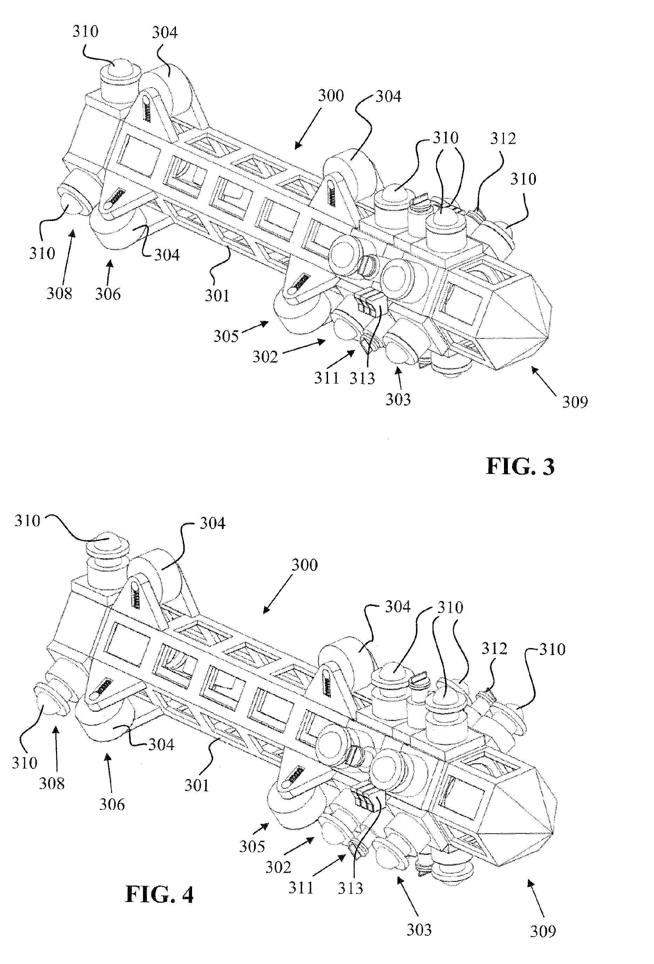

In a second exemplary embodiment, as shown in figures 3 and 4, the alignment device 300 is provided with spacing means 311 provided between the first cylinder set 202 and the second cylinder set 303. The spacing means 311 comprise a circumferential series of spacers 312 that are radially retractable and extendable by means of a fourth cylinder set. Furthermore the aligning device 300 is provided with sensors 313 for detecting the edge of the first pipe.

In use, the device 300 is provided inside the first pipe, and is moved along the pipe towards the first end of the first pipe. The sensors 313 detect the first end of the first pipe and stop the progression of the aligning device 300. In this situation, all cylinders, in particular the cylinders of the first, second, third and fourth cylinder set, are retracted as shown in figure 3. Only the spring-loaded wheels 304 are in contact of the inner side of the pipe.

The sensor 313 detects the first end of the first pipe and the controlling means of the aligning device 300 stops the movement of the aligning device 300 at a position wherein the spacers 312 are positioned outside the first end of the first pipe. Subsequently the spacers are extended, and the aligning device 300 is moved towards the inside direction of the first pipe until the spacers 312 abut the first edge of the first pipe.

Subsequently the first and third cylinder set is activated, such that the clamping shoes 310 of the first 302 and third 308 cylinder set, abut the inside of the pipe. Again the frame 301 is positioned at the centre line of the first pipe by controlling the cylinders of the first and third cylinder set.

The aligning device 300 with respect to the first pipe is fixed by exerting a clamping force on the inside wall of the first pipe using the third cylinder set 308. Again the shape of the first end of the first pipe is determined using the first clamping means 302, and the data pertaining to said shape is stored in a memory as shape data.

Subsequently the second pipe is positioned with the first end of the second pipe against the spacers 312. The second cylinder set 303 is activated and the clamping shoes 310 are extended to abut the inner side of the second pipe. The second cylinder set 303 is controlled in dependence of the shape data, such that the shape of the first end of the second pipe corresponds to the shape of the first end of the first pipe.

If the weld is made from the outside of the pipes a welding apparatus, such as a welding robot can be used for making a welding seam to connect the respective first ends of the first and second pipes. During this welding procedure, the spacers 312 are one by one retracted just before the welding apparatus reaches the position of said spacer 312.

When the welding seam is completed, all the cylinders of all the first cylinder set 302, second cylinder set 303, third cylinder set 308 and fourth cylinder set 311, are retracted. The clamping apparatus 300 can then be moved along the second pipe to a second end of the second pipe for repeating the above-mentioned steps to weld the second end of the second pipe to a third pipe.

A further advantage of this embodiment, is that the sensor 313 for detecting the edge of the pipe, is used for controlling the movements of the aligning device 300 within the pipe. With the sensors 313, the end of a pipe can automatically be sensed and the aligning device 300 can be stopped in order to prevent falling out of the end of the pipe. Damage to the aligning device 300 and possibly injuring of personnel in the area can thus be prevented.

In figure 5 an internal welding unit 511 is shown which can be provided between the first and second clamping means and thus take the place of the spacer units 211 and 311 of figures 1, respectively figures 3 and 4. Here sensor blocks 513 have been placed on the welding unit to enable detection of the pipe ends. The internal welding unit 511 further comprises one or more welding torches 512, each having a welding wire supply 514. The internal welding device can be provided with a guide 515 extending in circumferential direction of the frame of the clamping device, such that the welding torches 512, sensor blocks 513 and welding wire supplies 514 can be moved about the guiding rail 515 in such a manner that a circumferential weld can be made from the inside of two pipes. Each of the welding torches can be individually controlled for better welding results.

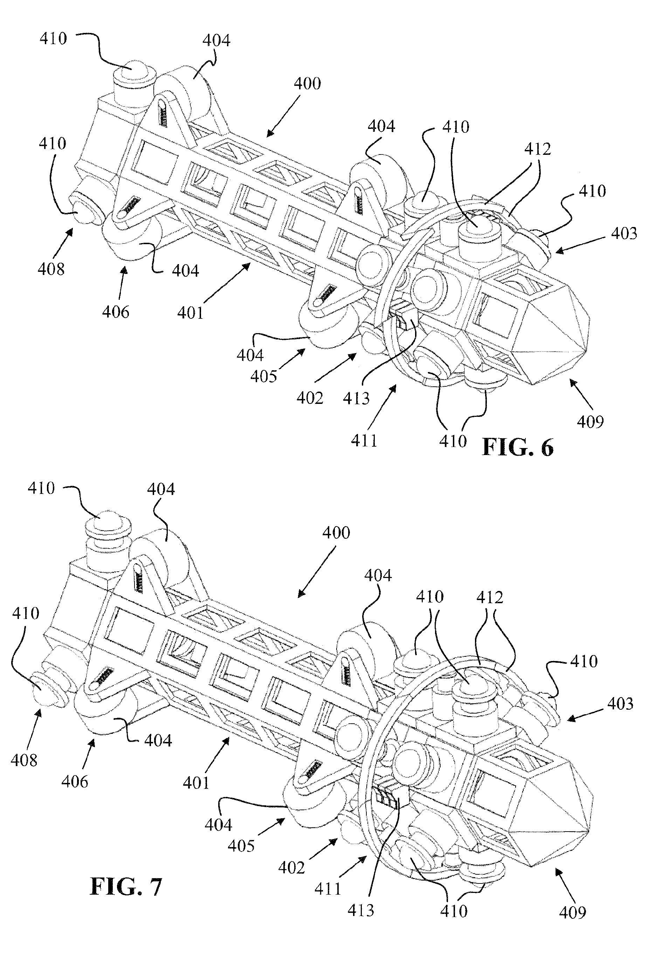

In a fourth exemplary embodiment as shown in figures 6, 7 and 8, the aligning device 400 is provided with backing means 411, which are provided between the first clamping means 402 and second clamping means 403. Said backing means 411 comprise a circumferential series of backing shoes 412 that are radially retractable and extendable by means of a fourth cylinder set. This embodiment is also provided with sensors 413 for controlling the movement of the aligning device 400 and positioning said aligning device 400 with respect to the first end of the first pipe.

In use, the aligning device 400 is provided at the inside of a first pipe, and is moved along the first pipe towards the open end of said first pipe. The sensor 413 detects the first end of the first pipe and sends a signal to the control unit which controls the movement of the aligning device 400 such that the centre position of the fourth cylinder set 411 is placed at the first end of the first pipe.

Subsequently the cylinders of the first 402 and third 408 cylinder set are extended for engaging the inner side of the first pipe, and the frame 401 of the aligning device 400 is placed at the centre line of the first pipe. Subsequently, the cylinders of the third cylinder set 408 are activated to exert a clamping force to the side of the first pipe for fixing the position of the aligning device 400.

The shape of the first pipe, in particular the first end of the first pipe, is determined with help of the first clamping means 402. The data pertaining to said shape is stored in a memory as shape data.

Subsequently the second pipe is positioned at a welding distance from and in line with the first end of the first pipe. The second set of cylinders 403 is activated and the clamping shoes 410 thereof are extended for engaging the inner side of the second pipe. The engagement of the clamping shoes 410 of the second clamping means 403 is based on the shape data.

Subsequently the cylinders of the fourth cylinder set 411 are activated and the backing shoes 412 are positioned against the side of the first pipe at the first end thereof, against the side of the second pipe at the first end thereof, and bridging the welding distance. This situation is schematically depicted in figure 7.

With the backing shoes 412 in place, a welding apparatus on the outside of the pipe can be activated to make a welding seam to connect the respective first ends of the first and second pipes.

When the welding seam has been completed, all the cylinders of the first cylinder set 402, second cylinder set 403, third cylinder set 408 and fourth cylinder set 411 are retracted such that the clamping apparatus 400 can be moved along the second pipe to a second end of the second pipe to weld the second ends of the second pipe to a first end of a third pipe.

As shown in figure 8 in more detail, the pistons of the cylinders 415 are not only extendable and retractable, but also rotatable, such that in the retracted position, as shown in figure 8, the ends of the individual backing shoes 412 are slightly rotated in clockwise direction such that these ends of the backing shoes 412 do not obstruct the retraction of the cylinders 415. In particular, all cylinders 415 of this embodiment rotate the backing shoes 412 in the same direction (clock wise or counter clock wise) as shown in figure 8. Subsequently, after rotation, the cylinders can be retracted, as shown in figure 6.

Whereas the invention has been shown and described referring to certain exemplary embodiments thereof, it will be clear to the expert that various adaptations in shape and details can be made clear without deviating from the spirit and scope of protection of the invention as defined by the attached claims.

## Claims

1. An internal line-up clamp for clamping a plurality of pipes to each other, said device comprising:
a rigid frame,
first and second clamping means supported on the frame for tightly engaging inner sides of respective first and second pipes having respective ends in line with and at a welding distance from each other,
means for operating the first clamping means,
means for operating the second clamping means,
**characterized in that** said device further comprises:
means for determining an abutment position of the first clamping means,
means for storing data concerning the abutment position of the first clamping means in a memory,
control means for controlling movement of the second clamping means to a position based upon the stored data concerning the abutment position of the first clamping means.

2. The device according to claim 1, further comprising welding means, said welding means being provided between the first and second clamping means and being supported on the frame.

3. The device according to claim 2, wherein the control means are furthermore arranged for controlling movement of the welding means to a position based upon the stored data concerning the abutment position of the first clamping means.

4. The device according any of the preceding claims, further comprising third clamping means for clamping the pipes, said third clamping means being supported on the frame such that said first clamping means is positioned between said second and third clamping means.

5. The device according to any of the preceding claims, further comprising backing means, said backing means being provided between the first and second clamping means and being supported on the frame.

6. The device according to any of the preceding claims wherein the control means are furthermore arranged for controlling movement of the backing means to a position based upon the stored data concerning the abutment position of the first clamping means.

7. The device according any of the preceding claims, further comprising movement means on the frame for moving the frame along the plurality of pipes.

8. The device according to any of the preceding claims, wherein the frame comprises first and second frame parts, the first and second clamping means being disposed on the first and second frame parts respectively, the device comprising connection means for connecting the first and second frame parts and for moving the first and second frame parts toward and away from each other in an axial direction.

9. The device according to any of the preceding claims, wherein said device further comprises spacing means, said spacing means are provided between the first and second clamping means and being supported on the frame.

10. The device according to claim 9, wherein the spacing means comprise a circumferential series of spacers that are radially retractable and extendible.

11. The device according to claim 9 or 10, wherein the control means are furthermore arranged for controlling movement of the spacing means to a position based upon the stored data concerning the abutment position of the first clamping means.

12. The device according to any of the preceding claims, wherein said device further comprises a transceiver for remote control of said device.

13. A method for welding a plurality of pipes, comprising a first pipe and a second pipe, to each other, the method comprising the steps of:
providing a device according to any of the preceding claims,
determining a shape of the first pipe with help of the first clamping means and storing data concerning said shape in a memory as shape data, and bringing the second clamping means into engagement with the second pipe and urging the second clamping means into a position on the second pipe based on the shape data;
tightly engaging an inside of the first pipe with use of the first clamping means and an inside of the second pipe with use of the second clamping means while keeping the first and second clamping means in line with respective ends of the first and second clamping means close to or against each other; and
connecting the first and second pipes using welding means.

14. A method according to claim 13, further comprising the following steps:
determining the diameter and deviations in diameter of the pipe, in particular of an end of the first pipe adjacent to the second pipe;
adjusting the cross-section of the pipe by deforming the end of the first pipe using first clamping means if the deviations from a circular cross-section of the first pipe are too large;
storing the position of the first clamping means in a memory as shape data.

15. A method according to claim 13 or 14, wherein during movement of the second clamping means into the position based on the shape data, the second pipe is deformed into a shape that corresponds substantially to the shape of the first pipe.
